# EUROPÄISCHE PATENTSCHRIFT

(11) **EP 0 948 719 B1**
(45) Veröffentlichungstag und Bekanntmachung des Hinweises auf die Patenterteilung: **05.12.2001**
(21) Anmeldenummer: 98942647.3
(22) Anmeldetag: 28.07.1998
(51) Int. Cl.: F16B 25/00

(54) **BEFESTIGUNGSSCHRAUBE MIT SELBSTFURCHENDEM GEWINDE**
SELF TAPPING SCREW
VIS AVEC FILETAGE A RAINURAGE AUTOMATIQUE

(30) Priorität: 29.07.1997 DE 19732615; 11.11.1997 DE 19749845
(43) Veröffentlichungstag der Anmeldung: 13.10.1999
(73) Patentinhaber: EJOT VERBINDUNGSTECHNIK GmbH & Co. KG, D-57334 Bad Laasphe (DE)
(72) Erfinder: GROSSBERNDT, Hermann, D-57334 Bad Laasphe (DE); KÖNIG, Gottfried, D-57334 Bad Laasphe (DE)
(74) Vertreter: Bardehle, Heinz, Dipl.-Ing.
(86) Internationale Anmeldenummer: EP9804720
(87) Internationale Veröffentlichungsnummer: WO9906719

(56) Entgegenhaltungen:
- EP-A- 0 104 552
- EP-A- 0 589 399
- DE-A- 2 754 870
- DE-C- 3 926 000
- US-A- 3 726 330

## Beschreibung

Die Erfindung bezieht sich auf eine durch Kaltwalzen geformte Schraube mit selbstfurchendem Gewinde für das Einschrauben insbesondere in thermoplastische Kunststoffe mit im wesentlichen durchgehend zylindrischem Gewindegrund und Gewindezähnen, die einen durchgehend gleich hohen Scheitel aufweisen, wobei die Freiräume zwischen benachbarten Gewindezähnen längs des Gewindes gleich gestaltet sind.

Eine derartige Schraube ist aus der DE-PS 39 26 000 bekannt. Diese Schraube, zu der in der Patentschrift ausdrücklich darauf hingewiesen wird, daß sie sich besonders gut für Ein- und Verstelleinrichtungen eigne, also für sogenannte Bewegungsgewinde, soll ein qualitativ hochwertiges Gewinde aufweisen, mit dem sich ein kontinuierliches und gut dosierbares Einschraubmoment erzielen läßt. Der Verformungsaufwand beim Herstellen der Schraube durch Kaltwalzen soll dabei geringer sein als bei herkömmlichen Schraubenarten. Um diese Aufgabe zu lösen, besitzt die Schraube einen Scheitelwinkel von etwa 40°, was das Fließen des Schraubenmaterials im Prozeß des Kaltwalzens erleichtert.

Durch die vorliegende Erfindung soll eine Schraube geschaffen werden, die im Gegensatz zur Wirkung eines Bewegungsgewindes für das Einschrauben insbesondere in thermoplastische Kunststoffe zum Zwecke einer Befestigung besonders geeignet ist. Beim Eindrehen derartiger Schrauben in Kunststoff wird dieser von den in den Kunststoff eindringenden Gewindezähnen verdrängt, wofür der Gewindequerschnitt einen ausreichenden Freiraum zur Verfügung stellen muß. Das von den Gewindezähnen verdrängte Kunststoffmaterial quetscht sich dabei in diesen Freiraum. Gemäß der DE-PS 27 54 870, Spalte 2, Abs. 1 ging man dabei von dem Gedanken aus, möglichst tief in das betreffende aus Kunststoff bestehende Werkstück einzudringen (große Tragtiefe), wozu bei einem Flankenwinkel von etwa 30° dann ein entsprechend großer Freiraum zur Verfügung gestellt werden muß. Bei der Schraube gemäß der DE-PS 27 54 870 weist hierzu der Gewindegrund eine Einschnürung auf, so daß für das von den Gewindezähnen verdrängte Kunststoffmaterial ein entsprechend großer Freiraum zur Verfügung steht. Das von den Gewindezähnen verdrängte Kunststoffmaterial muß dabei von dem Bereich des in den Kunststoff eingedrungenen Gewindezahnes einen Weg in den Gewindegrund zurücklegen, auf dem das verdrängte Kunststoffmaterial wegen der Länge dieses Weges die direkte enge Verbindung mit dem unverdrängten Kunststoffmaterial verliert, womit seine Fähigkeit, zur Auszugskraft beizutragen, vermindert wird. Unter Auszugskraft ist diejenige Kraft zu verstehen, die zum Ausreißen der eingedrehten Schraube erforderlich ist. Ein großer Freiraum für die Aufnahme von verdrängtem Kunststoffmaterial hat allerdings einen entsprechend geringen Gewindegrunddurchmesser (Kerndurchmesser) zur Folge, was dazu führen kann, daß beim Eindrehen einer solchen Schraube, insbesondere wenn sie über eine größere Zahl von Gewindegängen eingedreht wird, diese durch das auf sie wirkende Drehmoment überlastet wird und abreißt.

Der Gedanke der Kunststoffmaterialverdrängung steht auch im Vordergrund bei der Gestaltung der Schraube gemäß der europäischen Patentschrift 0 589 399. Mit dieser Schraube, die ausdrücklich für eine große Tragtiefe der Gewindeflanken konzipiert ist, soll eine derartige Materialverdrängung erreicht werden, daß das Material an den Gewindeflanken verdichtet wird, und zwar an denjenigen Flanken, die als sogenannte Lastflanken auf die Schraube wirkende Ausreißkräfte aufzunehmen haben. Um die Materialströmung in diesem Sinne zu beeinflußen, besitzt die Schraube einen konischen Gewindegrund mit dem kleineren Kerndurchmesser, benachbart zu der erwähnten Lastflanke. Hierdurch soll die Strömung des Kunststoffmaterials gegen die Lastflanke gerichtet werden, wo sich dann das Kunststoffmaterial verdichten soll. Diese gewollte Strömung des Kunststoffmaterials setzt voraus, daß das Material beim Eindrehen der Schraube ausreichend erwärmt und in eine Strömung und Verfestigung verwandelt wird. Die Gestaltung der bekannten Schraube beruht also darauf, das Kunststoffmaterial am Eindrehen der Schraube erheblich zu erweichen, zu verschieben und zu verdichten, womit es aus seinem ursprünglichen Verbund vollständig herausgelöst und in seiner Struktur verändert wird. Die Folge davon ist, daß die Lastflanken der Schrauben sich auf dieses derart veränderte Material abzustützen haben, was aber gerade zu einer Verringerung der Ausreißkräfte einer derart eingedrehten Schraube führt.

Die vorliegende Erfindung bricht mit dem bisher im Stand der Technik vorherrschenden Gedanken des möglichst tiefen Eindringens der Gewindezähne in das Kunststoffmaterial, was zunächst zur Erzielung hoher Ausreißkräfte plausibel erscheint. Hierzu kann man gemäß einer ersten Variante folgende Dimensionierung verwenden:
1. der Außendurchmesser Do und der Kerndurchmesser Dk des Gewindes bilden einen Quotienten Q1=Do/Dk in der Größe von 1,2 bis 1,4;
2. der Axialabstand P benachbarter Gewindezähne bildet mit der Höhe H der Gewindezähne einen Quotienten Q2=P/H, der zwischen 2,75 und 2,9 liegt;
3. der Scheitelwinkel der Gewindezähne liegt bei etwa 30°.

Diese Dimensionierung führt dazu, daß die Schraube relativ niedrige Gewindezähne aufweist, so daß die Schraube in dem Kunststoffmaterial mit relativ geringer Eindringtiefe sitzt. Dies hat den Vorteil, daß das verdrängte Kunststoffmaterial in seinem Gefüge nicht in erheblichem Umfang beeinträchtigt wird. Um trotz der relativ geringen Eindringtiefe hohe Ausreißkräfte zu erzielen, wird das Gewinde mit relativ kleiner Steigung hergestellt, so daß eine große Zahl von im Eingriff mit dem Kunststoff stehenden Gewindegängen geschaffen wird.

Gemäß einer zweiten Variante kann man auch folgende Dimensionierung verwenden:
1. der Außendurchmesser Do und der Kerndurchmesser Dk des Gewindes bilden einen Quotienten Q1=Do/Dk in der Größe von 1,25 bis 1,65;
2. der Axialabstand P benachbarter Gewindezähne bildet mit der Höhe H der Gewindezähne einen Quotienten Q2=P/H, der zwischen 2,35 und 2,7 liegt;
3. der Scheitelwinkel der Gewindezähne liegt bei etwa 30°.

Aufgrund dieser letzteren Dimensionierung ergibt sich ergänzend folgender Effekt: Der Kerndurchmesser besitzt ein Maß, das es ermöglicht, das Umformverhalten eines betreffenden Schraubenrohlings bei dessen Herstellung durch Rollen zu berücksichtigen, nämlich dadurch, daß die auf dem Kerndurchmesser aufbauende Höhe der Gewindezähne noch ausreichend groß ist, um beim Rollen mit dem auf den Rohling ausgeübten Druck im Bereich zwischen den Gewindezähnen das Material der Schraube in günstiger Weise zu verdrängen und damit gut ausgeformte Gewindezähne zu erzeugen, die einerseits noch den Vorteil aufweisen, daß sie bei ihrem Eindringen in Kunststoffmaterial dieses nicht beeinträchtigen, jedoch noch eine solche Höhe besitzen, daß sie sich mit erheblicher Präzision beim Rollen ausformen lassen.

Um diese durch die vorstehend erläuterten Dimensionierungen ermöglichten Effekte voll ausnutzen zu können, besitzt die erfindungsgemäße Schraube einen Scheitelwinkel des Gewindes, der bei etwa 30° liegt.

An sich ist ein derartiger Scheitelwinkel für in Kunststoff einzudrehende Schrauben bekannt, wie z.B. die DE-PS 27 54 870 zeigt. Mit dieser Schraube wird angestrebt, dem Kunststoffmaterial, in das die Schraube eingedreht wird, einen relativ großen Freiraum zwischen den Gewindegängen zur Verfügung zu stellen. Die mit dieser Schraube verfolgte Tendenz läuft also darauf hinaus, möglichst viel Kunststoffmaterial durch die Gewindezähne zu verdrängen, also mit großer Eindringtiefe zu arbeiten, um auf diese Weise hohe Ausreißkräfte zu erzielen. Die Lehren dieser Patentschrift passen daher nicht zu dem durch die DE-PS 39 26 000 gegebenen Stand der Technik, da dieser, abgesehen von der besonderen Eignung für Bewegungsgewinde, im Falle seiner Anwendung auf Kunststoffschrauben darauf hinausläuft, mit diesen möglichst wenig Kunststoffmaterial zu verdrängen.

Aufgrund der Kombination der die Höhe und den Abstand der Gewindezähne betreffenden Dimensionierungsmerkmale mit der Verwendung eines an sich bekannten, besonders kleinen Scheitelwinkels ergibt sich eine Intensivierung des Prinzips, beim Eindrehen der Schraube in Kunststoff möglichst wenig Kunststoffmaterial zu verdrängen, da die wegen des kleinen Scheitelwinkels von 30° zu verdrängende Kunststoffmasse wesentlich kleiner ist als bei einem Scheitelwinkel von 40°, wie er in der DE-PS 39 26 000 herausgestellt wird, was dazu führt, daß der zwischen den Gewindegängen bestehende Zwischenraum, definiert durch die Steigung des Gewindes, kürzer gehalten werden kann, womit die Zahl der in einem Kunststoffteil zu verankernden Gewindegänge bei gleicher Einschraublänge entsprechend erhöht wird. Dies führt dann zu entsprechend erhöhten Ausreißkräften.

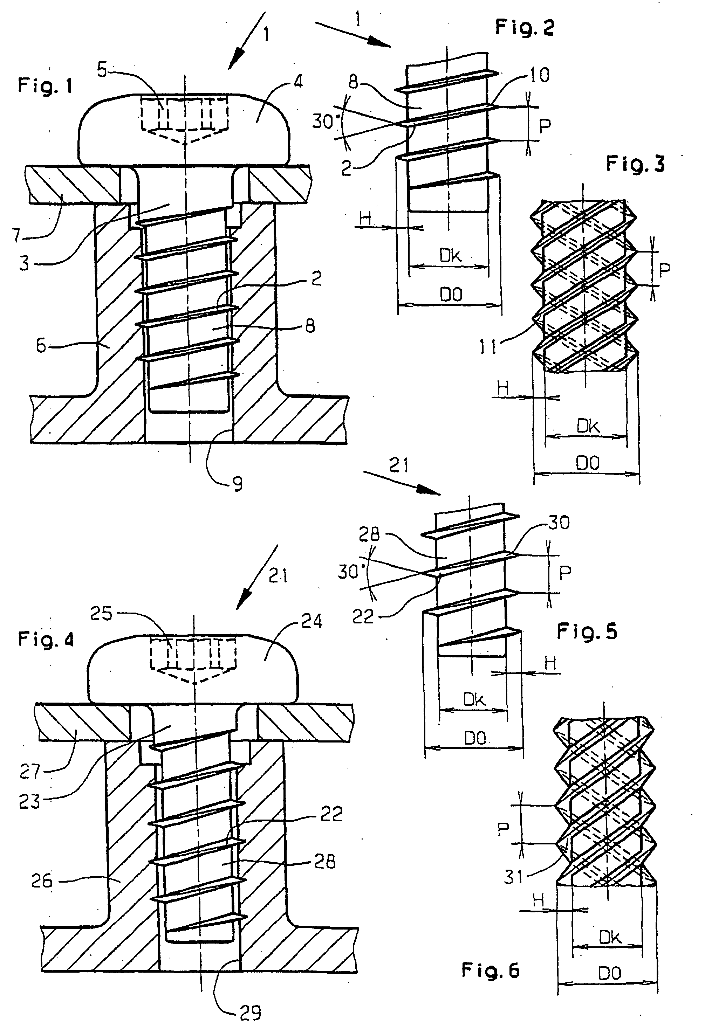

Hohe Ausreißkräfte bedingen eine entsprechende Belastbarkeit der Schrauben sowohl in axialer als auch in tangentialer Richtung. Je dünner der Querschnitt der Schraube gegenüber ihrem Außendurchmesser ist, desto stärker ist die auf ihren Querschnitt bezogene Belastung der Schraube sowohl bei ihrem Eindrehen als auch bei ihrem Anziehen. Um dabei hohen Ausreißkräften standhalten zu können, mußte man bisher bei den bekannten Schrauben sehr hohe Festigkeit des verwendeten Schraubenmaterials verlangen, was dazu geführt hat, daß für die hier in Rede stehenden Schrauben hochvergütete Materialien verwendet werden mußten, die einerseits teuer sind, die andererseits empfindlich auf Versprödungen reagieren, die sich aufgrund von Wasserstoffdiffusion ergeben. Dieser bekannte Effekt kann dazu führen, daß bei den bekannten fest angezogenen Schrauben aus hochvergütetem Material nach ihrem Eindrehen und Anziehen zeitverzögerte Sprödbrüche eintreten, z.B. durch nach Tagen auftretendes Wegsprengen ihres Kopfes. Aufgrund der erfindungsgemäßen Schraubendimensionierung ergeben sich Schrauben mit einem relativ großen Querschnitt in bezug auf ihren Außendurchmesser (wie z.B. ein Blick auf die Fig. 1 deutlich zeigt). Die erfindungsgemäßen Schrauben können daher aufgrund ihrer Gestaltung über ihren Querschnitt erheblich größere Drehmomente und Axialkräfte aufnehmen, als dies bisher möglich war. Hieraus eröffnet sich die Möglichkeit, die erfindungsgemäße Schraube aus einem Material herzustellen, das gegenüber herkömmlichen Schrauben eine geringere Festigkeit aufweist, d.h. es können Materialien verwendet werden, die aufgrund geringerer Vergütung nicht die Tendenz aufweisen, Wasserstoff durch Diffusion aufzunehmen und damit zu Sprödbrüchen zu neigen.

In den Figuren sind Ausführungsbeispiele der Erfindung dargestellt.

Es zeigen:
- **Figur 1**: eine in einen Tubus eingedrehte Befestigungsschraube zum Befestigen einer Platte gemäß der 1. Variante,
- **Figur 2**: einen Ausschnitt des eingängigen Gewindes der Schraube gemäß Figur 1 in vergrößerter Darstellung,
- **Figur 3**: einen Ausschnitt eines zweigängigen Gewindes.
- **Figur 4**: eine in einen Tubus eingedrehte Befestigungsschraube zum Befestigen einer Platte gemäß der 2. Variante,
- **Figur 5**: einen Ausschnitt des eingängigen Gewindes der Schraube gemäß Figur 4 in vergrößerter Darstellung,
- **Figur 6**: einen Ausschnitt eines zweigängigen Gewindes.

Figur 1 zeigt eine durch Kaltwalzen geformte Schraube 1 mit dem selbstfurchenden Gewinde 2, das sich gleichförmig über den Schaft 3 erstreckt. Auf der dem Endes des Schaftes 3 gegenüberliegenden Seite der Schraube 1 besitzt diese den Schraubenkopf 4, der hier mit einer profilierten Vertiefung 5 zum Einsetzen eines passenden Schlüssels versehen ist, mit dem die Schraube 1 in ein Werkstück, hier der Tubus 6, eingedreht wird. Die Schraube 1 dient zum Befestigen der Platte 7 an dem Tubus 6. Zu diesem Zweck wird die Schraube gegenüber dem Tubus 6 so angezogen, daß dabei ihr Kopf 4 die Platte 7 gegen den Tubus 6 preßt.

Aus Figur 1 geht deutlich die Besonderheit der erfindungsgemäßen Befestigungsschraube 1 hervor, nämlich ihre relativ geringe Eindringtiefe in das Material des Tubus 6 und der demgegenüber relativ große Kerndurchmesser Dk des Gewindes 2, dessen durchgehend zylindrischer Gewindegrund 8 gegenüber der Innenfläche 9 des Tubus 6 nur einen relativ kleinen Freiraum beläßt.

In Figur 2 ist in vergrößerter Darstellung ein Ausschnitt des Schaftes 3 gemäß Figur 1 dargestellt. An diesem Ausschnitt sind der Kerndurchmesser Dk, der Außendurchmesser Do und der Axialabstand P sowie die Höhe H der Gewindezähne 10 dargestellt. Außerdem ist in Figur 2 der Flankenwinkel der Gewindezähne mit 30° angegeben.

Aus Figur 2 ergibt sich, daß bei der vergrößert dargestellten Schraube der Quotient Q1 = Do/Dk bei 1,3 liegt, der Quotient Q2 = Axialabstand P/Höhe H liegt hier bei dem Wert 2,85.

In Figur 3 ist ein Ausschnitt aus einem zweigängigen Gewinde 11 dargestellt, das abgesehen von der Gangzahl, sonst weitgehend mit dem Gewinde 2 gemäß Figur 2 übereinstimmt. Der Axialabstand P bei dem Gewinde 11 gemäß Figur 3 wird hier zwischen den beiden benachbarten Gewindezähnen des einen und des anderen Gewindeganges gemessen. Daraus ergibt sich wie beim Ausführungsbeispiel gemäß Figur 1 der Quotient Q2 = Axialabstand P/Höhe H mit einem Wert von 2,85.

Bei den in Figur 1 und 2 dargestellten Befestigungsschrauben handelt es sich um solche, die üblicherweise mit einem Außendurchmesser von 1 mm bis 10 mm hergestellt werden. Die erfindungsgemäße Schraube eignet sich für das Einschrauben nicht nur in die heute üblichen thermoplastischen Kunststoffe, sondern auch in alle anderen Werkstoffe, die ähnliche Eigenschaften wie thermoplastische Kunststoffe aufweisen.

Figur 4 zeigt eine durch Kaltwalzen geformte Schraube 21 mit dem selbstfurchenden Gewinde 22, das sich gleichförmig über den Schaft 23 erstreckt. Auf der dem Ende des Schaftes 23 gegenüberliegenden Seite der Schraube 21 besitzt diese den Schraubenkopf 24, der hier mit einer profilierten Vertiefung 25 zum Einsetzen eines passenden Schlüssels versehen ist, mit dem die Schraube 21 in ein Werkstück, hier der Tubus 26, eingedreht wird. Die Schraube 21 dient zum Befestigen der Platte 27 an dem Tubus 26. Zu diesem Zweck wird die Schraube gegenüber dem Tubus 26 so angezogen, daß dabei ihr Kopf 24 die Platte 27 gegen den Tubus 26 preßt.

Aus Figur 4 geht deutlich die Besonderheit der erfindungsgemäßen Befestigungsschraube 21 hervor, nämlich ihre relativ geringe Eindringtiefe in das Material des Tubus 26 und der demgegenüber relativ große Kerndurchmesser Dk des Gewindes 22, dessen durchgehend zylindrischer Gewindegrund 28 gegenüber der Innenfläche 29 des Tubus 26 nur einen relativ kleinen Freiraum beläßt.

In Figur 5 ist in vergrößerter Darstellung ein Ausschnitt des Schaftes 23 gemäß Figur 4 dargestellt. An diesem Ausschnitt sind der Kerndurchmesser Dk, der Außendurchmesser Do und der Axialabstand P sowie die Höhe H der Gewindezähne 30 dargestellt. Außerdem ist in Figur 5 der Flankenwinkel der Gewindezähne mit 30° angegeben.

Aus Figur 5 ergibt sich, daß bei der vergrößert dargestellten Schraube der Quotient Q1 = Do/Dk bei 1,46 liegt. Der Quotient Q2 = Axialabstand P/Höhe H liegt hier bei dem Wert 2,48.

In Figur 6 ist ein Ausschnitt aus einem zweigängigen Gewinde 31 dargestellt, das, abgesehen von der Gangzahl, sonst weitgehend mit dem Gewinde 22 gemäß Figur 5 übereinstimmt. Der Axialabstand P bei dem Gewinde 31 gemäß Figur 6 wird hier zwischen den beiden benachbarten Gewindezähnen des einen und des anderen Gewindeganges gemessen. Daraus ergibt sich wie beim Ausführungsbeispiel gemäß Figur 4 der Quotient Q 2 = Axialabstand P/Höhe H mit einem Wert von 2,48.

Bei den in Figur 4 und 5 dargestellten Befestigungsschrauben handelt es sich um solche, die üblicherweise mit einem Außendurchmesser von 1 mm bis 10mm hergestellt werden. Die erfindungsgemäße Schraube eignet sich für das Einschrauben nicht nur in die heute üblichen thermoplastischen Kunststoffe, sondern auch in alle anderen Werkstoffe, die ähnliche Eigenschaften wie thermoplastische Kunststoffe aufweisen.

Für weiche Kunststoffe eignet sich eine erfindungsgemäße Schraube besonders gut, bei der innerhalb des Variationsspielraumes des Flankenwinkels von ca. 30° ein Wert gewählt wird, der zu besonderen spitzen Gewindegängen, nämlich mit einem Flankenwinkel von ca. 25°, führt.

## Patentansprüche

1. Durch Kaltwalzen geformte Befestigungsschraube (1) mit selbstfurchendem Gewinde (2,11) für das Einschrauben insbesondere in thermoplastische Kunststoffe mit im wesentlichen durchgehend zylindrischem Gewindegrund (8) und Gewindezähnen (10), die einen durchgehend gleich hohen Scheitel aufweisen, wobei die Freiräume zwischen benachbarten Gewindezähnen (10) längs des Gewindes (2,11) gleich gestaltet sind, **gekennzeichnet durch** die Kombination folgender Merkmale,
1. der Außendurchmesser Do und der Kerndurchmesser Dk des Gewindes bildet einen Quotienten Q1=Do/Dk in der Größe von 1,2 bis 1,4;
2. der Axialabstand P benachbarter Gewindezähne bildet mit der Höhe H der Gewindezähne einen Quotienten Q2=P/H, der zwischen 2,75 und 2,9 liegt;
3. der Scheitelwinkel der Gewindezähne liegt bei etwa 30°.

2. Befestigungsschraube (21) gemäß Oberbegriff von Anspruch 1, **gekennzeichnet durch** die Kombination folgender Merkmale,
1. der Außendurchmesser Do und der Kerndurchmesser Dk des Gewindes bildet einen Quotienten Q1=Do/Dk in der Größe von 1,25 bis 1,65;
2. der Axialabstand P benachbarter Gewindezähne bildet mit der Höhe H der Gewindezähne einen Quotienten Q2=P/H, der zwischen 2,35 und 2,7 liegt;
3. der Scheitelwinkel der Gewindezähne liegt bei etwa 30°.

## Claims

1. Fastening screw (1), formed by cold rolling, with a self-tapping thread (2, 11) for screwing, in particular, into thermoplastics, with an essentially continuously cylindrical thread bottom (8) and with thread teeth (10) which have a vertex of continuously equal height, the free spaces between adjacent thread teeth (10) being made the same along the thread (2, 11), **characterized by** the combination of the following features,
1. the outside diameter Do and the core diameter Dk of the thread forms [sic] a quotient Q1=Do/Dk of a magnitude of 1.2 to 1.4;
2. the axial spacing P of adjacent thread teeth forms, with the height H of the thread teeth, a quotient Q2=P/H which is between 2.75 and 2.9;
3. the vertex angle of the thread teeth is about 30°.

2. Fastening screw (21) according to the pre-characterizing clause of Claim 1, **characterized by** the combination of the following features,
1. the outside diameter Do and the core diameter Dk of the thread forms [sic] a quotient Q1=Do/Dk of a magnitude of 1.25 to 1.65;
2. the axial spacing P of adjacent thread teeth forms, with the height H of the thread teeth, a quotient Q2=P/H which is between 2.35 and 2.7;
3. the vertex angle of the thread teeth is about 30°.

## Revendications

1. Vis de fixation (1) à filetage autotaraudeur (2, 11) formée par laminage à froid destinée à être vissée, notamment dans des matières thermoplastiques, avec un fond de filetage (8) cylindrique sensiblement continu et des dents (10) de filetage, qui comportent un sommet continu de hauteur constante, les espaces libres entre des dents adjacentes (10) du filetage étant agencés de façon identique le long du filetage (2, 11), **caractérisée par** la combinaison des particularités suivantes :
1. le diamètre extérieur Do et le diamètre du noyau Dk du filetage forment un quotient Q1 = Do/Dk de l'ordre de 1,2 à 1,4 ;
2. l'écartement axial P entre des dents adjacentes du filetage forme avec la hauteur H des dents du filetage un quotient Q2 = P/H qui est compris entre 2,75 et 2,9 ;
3. l'angle de sommet des dents du filetage est de l'ordre de 30°.

2. Vis de fixation (21) selon le préambule de la revendication 1, **caractérisée par** la combinaison des particularités suivantes :
1. le diamètre extérieur Do et le diamètre du noyau Dk du filetage forment un quotient Q1 = Do/Dk de l'ordre de 1,25 à 1,65 ;
2. l'écartement axial P entre des dents adjacentes du filetage forme avec la hauteur H des dents du filetage un quotient Q2 = P/H qui est compris entre 2,35 et 2,7 ;
3. l'angle de sommet des dents du filetage est de l'ordre de 30°.
